# EUROPÄISCHE PATENTANMELDUNG

(11) **EP 1 363 175 A1**
(43) Veröffentlichungstag der Anmeldung: **19.11.2003**
(21) Anmeldenummer: 03010934.2
(22) Anmeldetag: 15.05.2003
(51) Int. Cl.: G05B 19/418

(54) **Automatisierungssystem oder Diagnosegerät für eine oder mehrere Anlagekomponenten sowie Verfahren zu dessen Betrieb**

(30) Priorität: 17.05.2002 DE 10222095
(71) Anmelder: SIEMENS AKTIENGESELLSCHAFT, 80333 München (DE)
(72) Erfinder: Grieb, Herbert, 76316 Malsch (DE); Kirchberg, Karl-Heinz, 76149 Karlsruhe (DE)

(57) **Zusammenfassung**

Die Erfindung richtet sich auf ein Verfahren zum Betrieb eines Automatisierungsgeräts für eine oder mehrere Anlagenkomponenten, wobei innerhalb des Automatisierungsgeräts Informationen über wenigstens eine Anlagenkomponente, insbesondere deren aktuelle Betriebsdaten, in vorgegebene Datenformate umgesetzt sowie ggf. ausgewertet und/oder derart aufbereitet werden, so dass daraus innerhalb des Automatisierungsgeräts zu jeder gesteuerten und/oder überwachten Anlagenkomponente ein genormtes Komponentenprofil und/oder -abbild geschaffen wird, das einer einheitlichen Weiterverarbeitung und/oder -auswertung innerhalb und/oder außerhalb des Automatisierungsgeräts zugänglich ist.

## Beschreibung

Die Erfindung richtet sich auf ein Automatisierungs- oder Diagnosegerät oder -system für eine oder mehrere Anlagenkomponenten sowie auf ein Verfahren zu dessen Betrieb.

Bei den meisten technischen Verfahren und Anlagen werden eine Vielzahl von unterschiedlichen Stellgeräten - Motore, Pumpen, Ventile, etc. - und sonstigen Feldgeräten - Messgeräte, Positionssensoren, Taster, etc. - benötigt. Bei der Auswahl geeigneter Komponenten sind vor allem diejenigen Merkmale ausschlaggebend, welche deren Schnittstelle zu dem Prozess betreffen - Nenn- und Maximalwerte, Ansprechgeschwindigkeiten, Präzision, etc. Der Schnittstelle dieser Komponenten zu einem Automatisierungs-, Bedienungs- und/oder Beobachtungsgerät - Hardwarevoraussetzungen, Kommunikationsprotokolle und Datenformate - wird demgegenüber nur eine sekundäre Bedeutung beigemessen und als durch die ausgewählten Komponenten vorgegeben betrachtet.

Diese Parameter sind sehr vielgestaltig: Es gibt Analog- und Digitalschnittstellen, bei ersteren wieder zu unterscheiden zwischen amplituden- und frequenzanalogen Signalen, ferner zwischen Strom- und Spannungssignalen, beispielsweise mit Signalbereichen von 4 ... 20 mA oder 0 ... 5 V, -10 V ... +10 V, etc., bei letztgenannten Digitalschnittstellen wieder zu unterscheiden zwischen parallelen und seriellen Schnittstellen, mit und ohne Handshake, ferner synchrone und asynchrone Datenübertragung, ferner mit oder ohne Übertragung von Paritäts- oder sonstigen Statusbits, Erkennungsbits, Adresszuweisungen oder dergleichen, Übertragungen in Telegrammform mit Start- und Stoppbits sowie hinsichtlich der verwendeten Datenformate - Integerwerte mit oder ohne Darstellung negativer Zahlen, Exponentialdarstellung oder Sonderformate, beispielsweise unter Berücksichtigung von Offsetwerten.

Die Folge daraus ist, dass bei dem Entwurf einer Automatisierungsanlage eine Kompatibilität zu den verschiedenartigsten Stell- und sonstigen Feldgeräten herzustellen ist. Dies erfordert u.a. eine höchst individuelle Programmierung, um die unterschiedlichsten Parameter-, Zahlen- und/oder Datenformate aneinander anzupassen, was bei komplexen Anlagen einen erheblichen Programmieraufwand mit sich bringt.

Andererseits werden von vielen Herstellern komponentenspezifische Softwarebausteine - beispielsweise Treiberbausteine - angeboten, beispielsweise zur Visualisierung von Messwerten, Stellsignalen, etc. Hiermit kann evtl. zwar der Programmieraufwand für die Herstellung einer Mensch-Maschine-Schnittstelle reduziert werden. Diese Bausteine erfordern jedoch jeweils spezifische Datenformate, die wiederum Anpassungen an die Kommunikationsschnittstelle zwischen dem Automatisierungsgerät und der betreffenden Bedienungs- und/oder Beobachtungsstation notwendig machen. Doch selbst dann führt die Verwendung derartiger, vorgegebener Bausteine dazu, dass beispielsweise beim Aufrufen von Informationen über unterschiedliche Anlagenkomponenten verschieden gestaltete Benutzeroberflächen angeboten werden, so dass das Überwachungs- oder Leitstellenpersonal eine große Anzahl jeweils abweichender Bedienungsprotokolle erlernen muss.

Aus diesen Nachteilen des beschriebenen Stands der Technik resultiert das die Erfindung initiierende Problem, durch geeignete Strukturen oder Betriebsverfahren einer Automatisierungs- oder Diagnoseanlage Möglichkeiten zu schaffen, um alle Stell- und sonstigen Feldgeräte ausschließlich im Hinblick auf ihre Leistungsfähigkeit auswählen und ohne Rücksicht auf deren Erfordernisse an die Schnittstelle zu der Automatisierungsanlage - Datenformat, Kommunikationsprotokoll - einsetzen zu können bei gleichzeitiger Minimierung des Aufwandes für Programmierung und Inbetriebnahme und/oder unter Schaffung einer möglichst einfachen, d. h. einheitlichen Mensch-Maschine-Schnittstelle an Bedienungsund/oder Beobachtungsstationen vor Ort wie auch in einer Leitstelle, Diagnosestation oder dergleichen.

Die Lösung dieses Problems gelingt dadurch, dass innerhalb des Automatisierungs- oder Diagnosegeräts oder -systems Informationen über wenigstens eine Anlagenkomponente, insbesondere deren aktuelle Betriebsdaten, in vorgegebene Datenformate umgesetzt sowie ggf. ausgewertet und/oder derart aufbereitet werden, so dass daraus innerhalb des Automatisierungsgeräts zu jeder gesteuerten und/oder überwachten Anlagenkomponente ein genormtes Komponentenprofil und/oder -abbild geschaffen wird, das einer einheitlichen Weiterverarbeitung und/oder -auswertung innerhalb und/oder außerhalb des Automatisierungsgeräts zugänglich ist.

Auf diese Weise wird eine Informationsstruktur geschaffen, wobei im Rahmen eines Automatisierungs- oder Diagnosegeräts zu verschiedenen Komponenten jeweils genormte Informationen vorliegen. Diese sind einerseits einer Verknüpfung durch komplexe Standard-Softwarebausteine, beispielsweise Reglerbausteine, zugänglich, so dass auch komplexe Automatisierungsaufgaben mit einem minimalen Programmieraufwand gelöst werden können. Andererseits können derart genormte Informationen unabhängig von der Herkunft der betreffenden Komponenten über eine standardisierte Schnittstelle zu anderen Automatisierungskomponenten, beispielsweise Bedienungs- oder Beobachtungsstationen, sowie an eine Leitstelle oder Diagnosestation übertragen und dort ebenfalls mit standardisierten Visualisierungsbausteinen sichtbar gemacht werden. Dabei ist von großer Bedeutung, dass nach Möglichkeit nicht nur ein einzelnes Messsignal der betreffenden Komponente normiert wird, sondern dass die gesamte Komponente informationstechnisch normiert wird, so dass an einer Leitstelle oder dergleichen eine umfassende Information vorliegt, beispielsweise mit potentiellen Fehlerzuständen, zu erwartender (Rest-)Betriebsdauer, etc., wobei ggf. nicht zur Verfügung stehende Parameter so weit als möglich aus sonstigen Informationen ergänzt werden. Soweit dies vorgesehen ist, kann sodann von einer Leitstelle oder einer sonstigen Bedienungsstation aus über einen standardisierten Eingabebaustein eine Einflussnahme auf einzelne Stell- oder sonstige Feldgeräte erfolgen. Aufgrund ihrer genormten Formate können derartige Anweisungen unschwer über die betreffende Schnittstelle an das Automatisierungsgerät übertragen, dort in das betreffende Informationsprofil eingesetzt und schließlich der betreffenden Anlagenkomponente mitgeteilt werden.

Es hat sich als günstig erwiesen, dass ein Informationssatz mit vorgegebenen Datenformaten sowie einer vorgegebenen Datenzuordnung zu Parametern, Datenreihenfolge und/oder Datensyntax angelegt bzw. gepflegt wird. Dabei ist zu unterscheiden zwischen allgemeinen, insbesondere invarianten Informationen über die betreffende Komponente, beispielsweise ausführungsbezogenen Parametern wie Art der Komponente, deren Nenn- oder Maximalwerte, ferner zwischen aktuellen Werten veränderlicher Größen, welche durch die Anlage und/oder deren Regelung hervorgerufen werden und im Folgenden als Istwerte bezeichnet werden sollen, weiterhin zwischen von dem Automatisierungsgerät variabel vorgebbaren Stellwerten sowie schließlich von einer Bedienperson beeinflussbaren Parametern. Dabei kann die Art der betreffenden Komponente kodiert sein, beispielsweise 01 = Motor, 02 = Pumpe, 03 = Ventil, 04 = Temperatursensor, usf. Bestimmte charakteristische Parameter werden sodann entsprechend interpretiert, beispielsweise als maximale Antriebsleistung bei einem Motor, maximale Förderleistung bei einer Pumpe, Maximaltemperatur bei einem Temperatursensor, etc. Auf diesem Weg lassen sich alle erdenklichen Stell- und sonstigen Feldgeräte anhand charakteristischer Merkmale vollständig einklassifizieren. Variable Größen können sodann auf die dem Automatisierungsgerät solchermaßen bekannten Maximal- oder Nennwerte bezogen und dadurch genormt dargestellt werden. Für die Erstellung bzw. Pflege dieser Daten müssen in anderen Formaten gelieferte Informationen ggf. hinsichtlich ihres Datenformats transformiert werden. Andererseits liegt dabei beispielsweise der Informationsgehalt einer Stellgröße bei einer Pumpe genau an derselben Stelle des betreffenden Informationsprofils wie bei einem Motor, so dass völlig unterschiedliche Anlagenkomponenten völlig identische Ansteuereigenschaften erhalten.

Das erfindungsgemäße Konzept lässt sich dahingehend weiterbilden, dass die Informationen zur Schaffung und/oder Pflege der genormten Komponentenprofile und/oder -abbilder synchron mit der Abarbeitung des Steuerungs-, Diagnose- oder Prognoseprogramms gewonnen werden (aktuelle Betriebswerte, beispielsweise Ist- und Stellwerte sowie alle sonstigen verfügbaren Signale aus dem Feldgerät) oder asynchron dazu (gerätespezifische Informationen, ggf. beeinflussbare Parameter). Dabei werden invariante und ggf. über Zeitintervalle hinweg konstante Parameter nur bei Bedarf eingelesen, veränderliche Größen dagegen in einem vorgegebenen Zeitraster aktualisiert, so dass alle Bestandteile eines Informationsprofils stets gültig sind, d. h. konform mit dem aktuellen Zustand der betreffenden Komponente. Hierzu gehört auch die Information über Störungen oder sonstige Fehlfunktionen. Derartige Informationen können synchron und/oder asynchron aktualisiert werden. Zu jeder beobachtbaren und/oder steuerbaren Anlagenkomponente, zu der ein vollständiges Komponentenabbild mit genormten Parametern zu erstellen ist, können die von der betreffenden Komponente zur Verfügung gestellten Informationen verwendet werden. Andere Informationen können ggf. von einem Funktionsbaustein oder einem sonstigen Programmteil berechnet werden oder sie werden manuell eingegeben oder von einem Datenträger eingelesen oder als nicht bekannt gekennzeichnet.

Bevorzugt ergeben sich die synchron mit dem Steuerungs-, Diagnose- oder Prognoseprogramm aktualisierten Informationen durch Abarbeitung (je) eines komponentenspezifischen Unterprogrammteils, das bei jedem zyklischen Durchlauf des Steuerungs-, Diagnose- oder Prognoseprogramms aufgerufen wird (Funktionsbaustein). Die durch Abarbeitung dieses Unterprogrammteils zu erfüllende Aufgabe besteht darin, die aktuellen Werte einzulesen, in das vorgegebene Datenformat umzuwandeln und an der speziell dafür vorgesehenen Stelle, beispielsweise Parameter bzw. Adresse des betreffenden Informationsprofils, einzutragen.

Im Gegensatz dazu sieht die Erfindung vor, dass die asynchron mit dem Steuerungs-, Diagnose- oder Prognoseprogramm gewonnenen Informationen bei der Initialisierung des betreffenden Komponentenprofils eingelesen und/oder eingespeichert werden. Dies kann entweder durch eine manuelle Eingabe erfolgen oder durch Auslesen aus einem Festwertspeicher der betreffenden Komponente oder aus einer komponentenspezifischen Datei.

Im Rahmen der Pflege der Komponentenabbilder im Automatisierungsgerät können Verknüpfungen mehrerer Eingangsgrößen vorgenommen werden, um eine Standardüberwachung beispielsweise mittels Plausibilitätsprüfungen vorzunehmen und beispielsweise bei Diskrepanzen Fehlermeldungen zu erzeugen. Diese Funktionalität kann bei der Aktualisierung der Komponentenabbilder zur Ausführung gelangen, beispielsweise in den Fällen, wo die zu verknüpfenden Eingangsgrößen nur eine einzige Anlagenkomponente betreffen, oder sie kann derart implementiert sein, dass die Plausibilitätsprüfungen nach einer zyklischen Aktualisierung aller Komponentenabbilder vorgenommen werden, was sich bei Verknüpfung von Signalen unterschiedlicher Komponenten empfiehlt.

Die Erfindung bietet ferner die Möglichkeit, dass im Rahmen der Pflege der Komponentenabbilder im Automatisierungsgerät Kenngrößen gebildet werden, die aus einzelnen Betriebswerten über größere Zeiträume hinweg gebildet werden. Derartige Kenngrößen können für eine übergeordnete Betrachtungsweise förderlich sein, um beispielsweise Über- oder Unterkapazitäten erkennen zu können oder dergleichen.

Indem bei der Pflege der Komponentenabbilder im Automatisierungsgerät aktuelle Betriebswerte mit zugeordneten Kennwerten, beispielsweise Mittelwerten, verglichen werden, lassen sich atypische Verhaltensweisen erkennen und ggf. entsprechende Meldungen erzeugen. Eine solche Funktionalität ist besonders effektiv bei wenig schwankenden Betriebsgrößen.

Ein weiterer Vorteil der Erfindung liegt darin, dass der Informationssatz zu einer Bedienungs-, Beobachtungs- und/oder Leitstation oder weiteren Einrichtungen übertragbar und dort zur Darstellung und/oder Auswertung der betreffenden Informationen verwendbar ist. Aufgrund der vorgegebenen Struktur der Informationssätze zu den einzelnen Komponenten können diese sowohl bei der Datenübertragung wie auch bei der anschließenden Visualisierung einheitlich behandelt werden. Es genügt daher jeweils ein einziger Programmteil für die Verarbeitung der Informationssätze der unterschiedlichsten Komponenten. Gleichzeitig ergibt sich dadurch eine einheitliche Mensch-Maschine-Schnittstelle, welche die Beobachtung und/oder Überwachung aller Komponenten erleichtert.

Eine weitere Optimierung erfährt die Erfindung dadurch, dass die Kommunikation zwischen dem Automatisierungsgerät und einer Bedienungs-, Beobachtungs- und/oder Leitstation mittels Datenpaketen erfolgt, die jeweils einen, mehrere oder alle aktuellen Daten eines Komponentenabbilds oder -profils enthalten. Somit kann beispielsweise komponentenweise entschieden werden, in welchen Zeitintervallen die betreffenden Daten an eine Visualisierungsstation übertragen werden, oder die Übertragung aktueller Werte kann auf Anfrage vorgenommen werden. Indem solchenfalls die auf eine Komponente bezogenen Daten zusammengefasst und als Datenpaket übertragen werden, lässt sich einerseits ein kompaktes Datenformat einhalten, das die Datenübertragungsleitungen möglichst wenig belastet, andererseits werden gleichzeitig sämtliche relevanten Werte aktualisiert, um einen vollständigen Überblick über die betreffende Komponente zu liefern.

In Weiterverfolgung des obigen Erfindungsgedankens ist ferner vorgesehen, dass die komponentenspezifischen Datenpakete zyklisch von dem Automatisierungsgerät zu der Bedienungs-, Beobachtungs- und/oder Leitstation übertragen werden, wobei die Sendeintervalle einem oder mehreren Steuerzyklen des Automatisierungsgeräts entsprechen können. Dadurch können an der betreffenden Station visualisierte Anlagenwerte ständig aktualisiert werden, so dass eine Überwachungsperson den Geschehensablauf in der Anlage ständig verfolgen kann.

Wenn zur Darstellung der aktuellen, komponentenspezifischen Informationen im Rahmen einer Bedienungs-, Beobachtungsund/oder Leitstation ein einheitliches Programm verwendet wird, so lässt sich der Programmieraufwand an der betreffenden Station minimieren. Außerdem lassen sich so mit geringstem Aufwand die Betriebsdaten aller Komponenten der Anlage visuell darstellen, wozu keinerlei komponentenspezifische Software an der Beobachtungs- oder Leitstation vorhanden sein muss. Da nicht verschiedene Programme oder Programmsequenzen abgearbeitet werden, selbst wenn in der Anlage Komponenten der unterschiedlichsten Hersteller eingesetzt sind, lässt sich die Visualisierung der Betriebsdaten aller Einzelkomponenten leicht in ein Gesamtkonzept integrieren, wobei beispielsweise ein auf einem Bildschirm (auszugsweise) darstellbarer Verrohrungs- und/oder Schaltplan sämtliche an ein Automatisierungsgerät angeschlossene Anlagenkomponenten enthält, die von einer Bedienperson beispielsweise durch Anklicken individuell ausgewählt werden können, um die betreffenden Informationen anzuzeigen.

Die Erfindung empfiehlt ferner, im Rahmen der Darstellung der aktuellen, komponentenspezifischen Informationen an einer Bedienungs-, Beobachtungs- und/oder Leitstation einheitliche Bildschirmoberflächen und/oder Bedienstrukturen zu verwenden. Dadurch können die Visualisierungstechniken bzw. deren interaktive Steuerung beispielsweise zur Wiedergabe einzelner Werte in Form von Kurven anstelle aktueller Zahlenwerte bezüglich aller Komponenten einem einheitlichen Prinzip folgen, das von einer Bedienperson schnell gelernt und sodann mühelos angewendet werden kann.

Schließlich entspricht es der Lehre der Erfindung, dass im Rahmen eines Komponentenprofils oder -abbilds von einer Bedienungs- oder Leitstation beeinflussbare Parameter zur Verfügung stehen, um definiert auf die betreffende Anlagenkomponente und/oder deren Steuerung einwirken zu können. Auch hierfür ist keinerlei spezielle Software an der betreffenden Bedienungsstation erforderlich. Auch die Eingabe von Parametern, Befehlen oder Daten kann von einem einheitlichen Programmteil abgearbeitet werden, das diese Daten in geeignete Kommunikationsbefehle umsetzt und diese an das Automatisierungsgerät sendet, wo sie ausgewertet werden können, um die gewünschte Komponente, deren angesprochenen Parameter und den dort neu zu verwendenden Wert zu identifizieren und den betreffenden Informationsblock entsprechend zu ergänzen bzw. zu überschreiben und ggf. einen Befehl an einen komponentenspezifischen Umsetzungs-Programmteil zu erteilen, um die Information der betreffenden Komponente mitzuteilen. Da jedoch eine derartige Informationsweiterleitung nach Abarbeitung einer Sequenz des zyklischen Automatisierungsprogramms und damit innerhalb kürzester Zeitintervalle ohnehin erfolgt, kann ein spezieller Anstoß zur Übertragung der geänderten Parameterinformationen auch unterbleiben.

Ein erfindungsgemäßes Automatisierungs- oder Diagnosegerät oder -system für eine oder mehrere Anlagenkomponenten zeichnet sich aus durch wenigstens eine Einrichtung zur Umsetzung von Informationen über wenigstens eine Anlagenkomponente in vorgegebene Datenformate sowie ggf. zu deren Auswertung und/oder Aufbereitung in derartiger Form, dass daraus zu jeder gesteuerten und/oder überwachten Anlagenkomponente ein genormtes Komponentenprofil und/oder -abbild geschaffen wird, das einer einheitlichen Weiterverarbeitung und/oder -auswertung innerhalb und/oder außerhalb des Automatisierungsgeräts zugänglich ist. Ferner sollte im Rahmen eines derartigen Geräts oder Systems auch ein Speicherbereich für die Hinterlegung dieser genormten Komponentenprofile und/oder -abbilder reserviert sein.

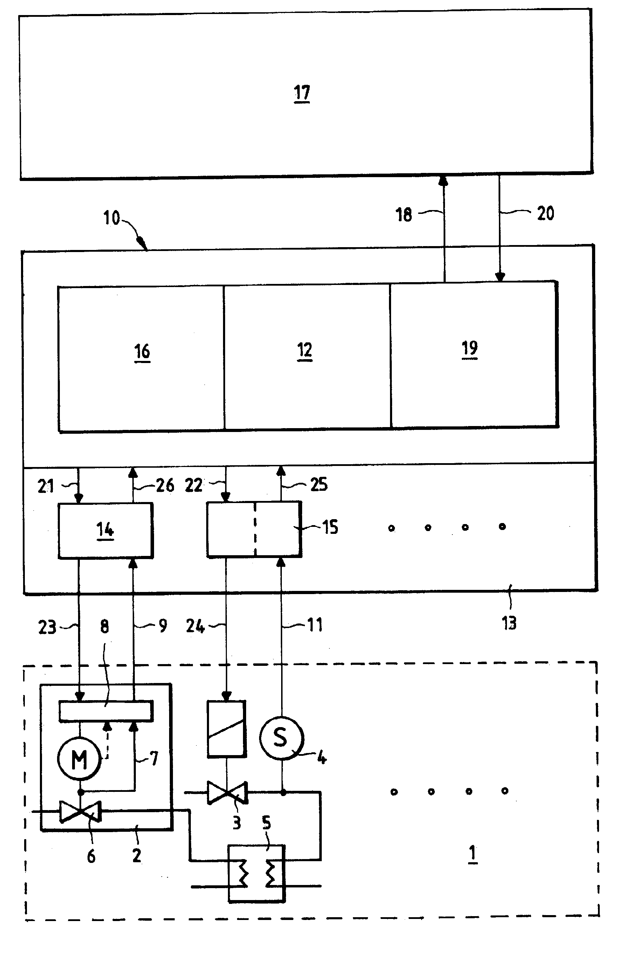

Weitere Merkmale, Einzelheiten, Vorteile und Wirkungen auf der Basis der Erfindung ergeben sich aus der nachfolgenden Beschreibung eines bevorzugten Ausführungsbeispiels der Erfindung sowie anhand der Zeichnung. Deren einzige Figur zeigt ein Leitsystem einer technischen Anlage mit der erfindungsgemäßen Struktur.

In der Zeichnung ist in schematisierter Form ein Ausschnitt aus einer technischen Anlage 1 wiedergegeben. Repräsentativ für die Vielzahl von Anlagenkomponenten ist ein "intelligentes" Ventil 2, ein normales Magnetventil 3, ein Durchflusssensor 4 und ein Wärmetauscher 5 dargestellt. Im Gegensatz zu dem normalen Ventil 3 oder Sensor 4 umfasst das intelligente Ventil 2 neben dem motorisch angetriebenen Ventil 6 einen oder mehrere interne Sensoren 7 sowie auch eine integrierte Auswerteeinheit 8, um damit eine Eigendiagnose durchzuführen und ggf. ein die Fehlfunktion anzeigendes Signal 9 an das Automatisierungsgerät 10 zurückzusenden.

Das Fehler- und/oder Rückmeldesignal 9 wie auch das Messsignal 11 des Durchflusssensors 4 und auch weitere Signale zusätzlicher, nicht dargestellter Feldgeräte der Anlage 1 erreichen das Automatisierungsgerät 10 in unterschiedlichen Signalformen. Beispielsweise kann das Rückmelde- und/oder Fehlersignal 9 des intelligenten Ventils 2 als Datenwort im Rahmen einer seriellen Digitalschnittstelle übermittelt werden, während das Messsignal 11 des Durchflusssensors 4 vielleicht als analoges Stromsignal mit einem Amplitudenbereich von 4 mA bis 20 mA übertragen wird. Während diese Signale - ggf. nach Analog-Digital-Wandlung - von dem Automatisierungsprogramm 12 direkt verarbeitet werden, ist bei der erfindungsgemäßen Struktur eine Signalvorverarbeitungsebene 13 zwischengeschaltet, die vorzugsweise in demselben Zyklus arbeitet wie das Automatisierungsprogramm 12 selbst.

Die Signalvorverarbeitungsstufe 13 wird pro Zyklus jeweils vor den Berechnungen des Automatisierungsprogramms durchlaufen, wobei nicht nur analoge Eingangssignalwerte 11 in Digitalwerte umgewandelt werden, sondern darüber hinaus auch eine Zuordnung zu vorgegebenen Informationsblöcken 14, 15 stattfindet. Die dort eingetragenen Werte sind aus den ggf. digitalisierten Eingangssignalen 9, 11 abgeleitet, beispielsweise durch Addition oder Subtraktion von Offsetwerten und/oder durch normierende Multiplikation mit komponentenspezifischen Faktoren, beispielsweise Nenn- oder Maximalwerten.

Darüber hinaus können bei dieser Signalvorverarbeitung 13 einfach zu ermittelnde Anlagenfehlfunktionen erkannt werden, wenn beispielsweise von dem Automatisierungsprogramm 12 vorgegebene Stellwertsignale 21 dauerhaft von den betreffenden Rückmeldesignalen 9 abweichen oder dergleichen.

Die im Rahmen der Signalvorverarbeitung 13 gebildeten Informationsblöcke 14, 15 haben für alle Anlagenkomponenten eine einheitliche Struktur und sind daher kompatibel mit vorgefertigten Standard-Funktionsblöcken des Automatisierungsprogramms 12, beispielsweise mit der Funktionalität von P-, PI- oder PID-Reglern, Zweipunktreglern oder dergleichen. Da alle Komponentenparameter in den Informationsblöcken 14, 15 genormt sind, beispielsweise auf Wertebereiche zwischen 0 ... 100, -100 ... +100, -1,00 ... +1,00 oder dergleichen, kann eine direkte Verkopplung mit den standardisierten Reglern oder sonstigen Verknüpfungsbausteinen erfolgen, wobei letztere nur noch hinsichtlich ihres Zeitverhaltens parametrisiert werden müssen. Dies ist nur ein minimaler Programmieraufwand im Verhältnis zu der bisherigen Technik, wo vielfältige Umrechnungen erforderlich waren.

Vor, während oder nach Abarbeitung des Automatisierungsprogramms 12 können weitere Berechnungen angestellt werden, beispielsweise können im Rahmen eines Prognosebausteins 16 anhand der vorverarbeiteten Eingangssignale komplexe Kriterien berechnet werden, um Ausfallwahrscheinlichkeiten einzelner oder mehrerer Anlagenkomponenten 2 ... 5 zu ermitteln. Diese Berechnungsergebnisse können wie auch von dem Automatisierungsprogramm 12 berechnete (normierte) Stellwerte 21, 22 zu den betreffenden Informationsblöcken 14, 15 abgespeichert werden.

Nun kann sich einerseits eine Signalnachverarbeitung 13 anschließen, während der die (normierten) Stellwerte 21, 22 aus den Informationsblöcken 14, 15 ausgelesen, in für die Stellgeräte 2, 3 verständliche Ausgangssignale 23, 24 umgesetzt und ausgegeben werden, um steuernd auf die Anlage 1 einzuwirken.

Andererseits stehen nun in den Informationsblöcken 14, 15 aktualisierte Signalwerte zur Verfügung. Diese können deshalb - automatisch oder nach Aufforderung - an eine oder mehrere Bedienungs- und/oder Beobachtungs- oder Leitstation(en) 17 oder damit integrierte oder angeschlossene Auswertesysteme, beispielsweise Instandhaltungs-Management-Systeme, übertragen werden. Zu diesem Zweck liest ein Programmbaustein 19 die Daten eines Informationsblocks 14, 15 und bildet daraus nach einem vorgegebenen Muster jeweils ein Datenpaket, das in Form eines Telegramms 18 an die Bedienungs- oder Leitstation 17 gesendet wird. Dabei kann beispielsweise jedem Parameter des Informationsblocks eine mit zu übertragende Kennziffer zugeordnet sein oder sequentiell aneinander gereihte Parameter werden durch Ende-Markierungen voneinander getrennt oder dergleichen. Ein vor- oder nachgestellter Erkennungsparameter ordnet den betreffenden Datensatz einer bestimmten Anlagenkomponente 2 oder einer gemeinsam zu betrachtenden Komponentengruppe 3, 4 zu.

Aufgrund ihres einheitlichen Formats lassen sich in der empfangenden Station 17 alle Informationen über jede mit dem Automatisierungsgerät 10 gekoppelte Anlagenkomponente 2 ... 4 mit einem einzigen Programmteil aus den empfangenen Telegrammen 18 extrahieren und einem Visualisierungs-Programmteil zuführen, der die abgefragten oder aus sonstigen Gründen darzustellenden Informationen der betreffenden Komponente aufbereitet und über einen Bildschirm oder dergleichen sichtbar macht. Dabei ist ohne Ansehung der Art, Herkunft oder sonstigen Beschaffenheit der betreffenden Komponente 2 ... 5 immer derselbe Visualisierungsbaustein zuständig; dieser verwendet allenfalls in Abhängigkeit von der Art der betreffenden Komponente - beispielsweise Motor oder Pumpe - und/oder in Abhängigkeit von sonstigen Befehlen des Bedienungs- oder Überwachungspersonals unterschiedliche Grafik-Unterprogrammteile. Jedoch folgt die Darstellungsweise einem einheitlichen Prinzip, das von einer Person leicht erlernt und anschließend mühelos angewendet werden kann, um sich sämtliche interessanten Informationen anzeigen zu lassen.

Weiterhin kann vorgesehen sein, dass für einzelne oder alle Anlagenkomponenten 2 ... 5 Parameter eingegeben werden können. Beispielsweise kann ein manueller (Teil-)Betrieb vorgesehen sein, wobei eine Person von einer Bedienungsstation 17 aus direkt Einfluss auf einzelne Anlagenkomponenten 2 ... 5 ausüben kann. Zu diesem Zweck kann beispielsweise in einem Fenster mit angezeigten Informationen zu einer Komponente 2 ... 5 eine Editionsfunktion aktiviert und daraufhin der angezeigte Parameter überschrieben werden. Die neue Information wird von der Station 17 ebenfalls in ein Telegramm 20 umgewandelt und an das Automatisierungsgerät 10 verschickt. Dort wird das Telegramm 20 gelesen und daraufhin der neue Parameter in den Informationsblock 14, 15 der betreffenden Komponente 2 ... 5 eingetragen und ggf. als manuell vorgegebener Wert gekennzeichnet, um ein Überschreiben durch das Automatisierungsprogramm 12 zu vermeiden. Bei der darauffolgenden Signalnachverarbeitungsphase 13 wird der manuell veränderte Parameter der betreffenden Komponente 2 ... 5 mitgeteilt, die sich daraufhin entsprechend verhält.

Im Rahmen des erfindungsgemäßen Konzepts sind eine Reihe von Zusatzfunktionen realisierbar:

Neben der oben beschriebenen zyklischen Betriebsart der Signalvor- oder -nachbearbeitung 13 gibt es auch eine azyklische Einflussnahme auf die komponentenspezifischen Informationsblöcke 14, 15. Dabei werden Verwaltungsinformationen wie Gerätestammdaten, Parametrierung, Einbaudatum, Revisionsnummern, etc. eingelesen, und zwar entweder aus dem betreffenden Feldgerät selbst oder aus einer komponentenspezifischen Datei oder aber über eine Tastatur, die von einer Person für die manuelle Eingabe verwendet wird. Diese azyklische Betriebsart wird neben der Installation ggf. auch bei einem Neustart, Wiederanlauf oder nach Systemstörungen im Leitsystem wirksam, wobei hierzu jedoch vorwiegend Backup-Dateien gelesen werden.

Ferner können zu jeder Komponente anwender- bzw. betriebsspezifische Zusatzinformationen wie beispielsweise Inventarnummern eingegeben werden, vorzugsweise im Rahmen der azyklischen Betriebsart.

Anhand ggf. auswählbarer Funktionen können Gerätezustände ermittelt werden, beispielsweise Störungen, aber auch Beschleunigungswerte (anhand einer Differenzbildung aufeinander folgender Messwerte) oder Signalmittelwerte.

Anhand von Plausibilitätsbetrachtungen können gerätebezogene Meldungen erzeugt werden, beispielsweise die Einhaltung von dynamischen und/oder statischen Grenzwerten, um Überlastungen zu erkennen oder dergleichen. Für diese Plausibilitätsbetrachtungen können auch weitere Signale aus dem Automatisierungsgerät 10 verwendet werden, beispielsweise Stellwerte 22, die mit Messsignalen 11 bzw. daraus berechneten Meßwerten 25 wirkungsmäßig nachgeordneter Sensoren 4 ggf. nach Ablauf einer Verzögerungszeit korreliert sein sollten.

Für den Fall der Wartung bei laufender Anlage können einzelne Komponenten 2 ... 4 deaktiviert werden, wobei die von dem Automatisierungsprogrammteil 12 oder von einer Person in den Informationsblock 14, 15 einer Komponente 2 ... 4 eingetragenen Stell- oder Parametersignale bei der Signalnachverarbeitung 13 nicht an die betreffende Komponente 2 ... 4 weitergeleitet werden, beispielsweise bis die vorgenommenen Änderungen quittiert worden sind und übernommen werden.

Bei der Signalvorverarbeitung 13 oder bei der Datenübermittlung 19 an eine Leitstelle 17 können die jeweils aktuellen Signalwerte 21, 22, 25, 26 mit einem Zeitstempel versehen werden, so dass zu einem späteren Zeitpunkt anhand von in der Leitstelle 17 abgespeicherten Meldungen oder Signalfolgen der Hergang, d. h. die zeitliche Abfolge einzelner Ereignisse, rekonstruiert werden kann.

Neben der Kommunikation mit Bedienungs- und/oder Beobachtungsstationen oder Leitstellen 17 dient die Normung der Informationsblöcke auch der Abspeicherung von Einstellungsparametern, da hierzu einfach sämtliche Informationsblöcke 14, 15 in eine Datei kopiert werden können, die sodann für die unterschiedlichsten Zwecke archiviert werden kann, einerseits für das Initialisieren des Automatisierungsgeräts 10 nach einem Datenverlust, andererseits aber auch für eine Nutzung durch Instandhaltungs-Management-Systeme, insbesondere Berechnungen der zu erwartenden Restlaufzeit einzelner Anlagenkomponenten. Ferner kann die Leistungsfähigkeit der Anlage 1 oder einzelner Komponenten 2 ... 5 bei unterschiedlichen Parametereinstellungen dokumentiert und für anschließende Optimierungen ausgewertet werden. Dadurch lassen sich schließlich auch Wirtschaftlichkeitsbetrachtungen zu bestimmten Anlagenteilen anstellen.

Insbesondere im Rahmen des Kommunikations-Programmteils 19 können weitere Funktionalitäten vorgesehen sein, um beispielsweise bei Anschluss mehrerer Bedienungsstationen 17 konkurrierende Änderungswünsche einzelner Parameter auszuschließen. Zu diesem Zweck kann beispielsweise jeweils einer der Bedienungsstationen 17 ein Indikator zugewiesen sein, um anzuzeigen, dass nur seitens dieser Bedienungsstation 17 geäußerte Änderungswünsche akzeptiert und in den betreffenden Informationsblock 14, 15 eingetragen werden. Schließlich kann insbesondere unter Mitwirkung des Kommunikations-Programmteils 19 der Informationsfluss von den Anlagenkomponenten 2 ... 5 über das Automatisierungsgerät 10 bis hin zu einer Leitstelle 17 überwacht werden, um Kommunikationsprobleme und daraus folgende Fehlfunktionen der Anlage 1 zu vermeiden. Zu diesem Zweck kann im Rahmen eines Komponentenabbildes wenigstens ein Parameter enthalten sein, der von der Signalverarbeitungsstufe 13 ausgefüllt wird.

## Patentansprüche

1. Verfahren zum Betrieb eines Automatisierungs- oder Diagnosegeräts (10) oder -systems für eine oder mehrere Anlagenkomponenten (2 ... 5), **dadurch gekennzeichnet, dass** im Bereich wenigstens eines Automatisierungsgeräts (10) Informationen über wenigstens eine Anlagenkomponente (2 ... 5), insbesondere deren aktuelle Betriebsdaten (9, 11), in vorgegebene Datenformate (25, 26) umgesetzt sowie ggf. ausgewertet und/oder derart aufbereitet werden, so dass daraus innerhalb des Automatisierungsgeräts (10) zu jeder gesteuerten und/oder überwachten Anlagenkomponente (2 ... 5) ein genormtes Komponentenprofil und/oder -abbild (14, 15) geschaffen wird, das einer einheitlichen Weiterverarbeitung (16) und/oder -auswertung (12, 17) innerhalb und/oder außerhalb des Automatisierungsgeräts (10) zugänglich ist.

2. Verfahren nach Anspruch 1, **dadurch gekennzeichnet, dass** wenigstens ein Informationssatz (14, 15) mit vorgegebenen Datenformaten sowie einer vorgegebenen Datenzuordnung zu Parametern, Datenreihenfolge und/oder Datensyntax angelegt bzw. gepflegt wird.

3. Verfahren nach Anspruch 1 oder 2, **dadurch gekennzeichnet, dass** die Informationen zur Schaffung und/oder Pflege der genormten Komponentenprofile und/oder -abbilder (14, 15) synchron mit der Abarbeitung des Steuerungsprogramms (12) oder Prognoseprogramms (16) gewonnen werden (aktuelle Betriebswerte 25, 26) oder asynchron dazu (gerätespezifische Informationen).

4. Verfahren nach einem der Ansprüche 1 bis 3, **dadurch gekennzeichnet, dass** die synchron mit dem Steuerungsprogramm (12) oder Prognoseprogramm (16) gewonnenen Informationen (25, 26) durch (je) ein komponentenspezifisches Unterprogrammteil erzeugt werden, das bei jedem zyklischen Durchlauf des Steuerungsprogramms (12) oder Prognoseprogramms (16) aufgerufen wird (Funktionsbaustein 14, 15).

5. Verfahren nach einem der vorhergehenden Ansprüche, **dadurch gekennzeichnet, dass** die asynchron zu dem Steuerungsprogramm (12) oder Prognoseprogramm (16) gewonnenen Informationen bei der Initialisierung des betreffenden Komponentenprofils (14, 15) und/oder auf Anforderung eingelesen und/oder eingespeichert werden.

6. Verfahren nach einem der vorhergehenden Ansprüche, **dadurch gekennzeichnet, dass** im Rahmen der Pflege der Komponentenabbilder (14, 15) im Automatisierungsgerät (10) Verknüpfungen mehrerer Ein- und/oder Ausgangsgrößen (9, 23; 11, 24) vorgenommen werden, um eine Standardüberwachung beispielsweise mittels Plausibilitätsprüfungen vorzunehmen und bei Diskrepanzen Fehlermeldungen erzeugen zu können.

7. Verfahren nach einem der vorhergehenden Ansprüche, **dadurch gekennzeichnet, dass** im Rahmen der Pflege der Komponentenabbilder (14, 15) im Automatisierungsgerät (10) Kenngrößen gebildet werden, die aus einzelnen Betriebswerten (9, 11, 23 ... 26) über größere Zeiträume hinweg gebildet werden.

8. Verfahren nach einem der vorhergehenden Ansprüche, **dadurch gekennzeichnet, dass** im Rahmen der Pflege der Komponentenabbilder (14, 15) im Automatisierungsgerät (10) aktuelle Betriebswerte (9, 11, 23 ... 26) mit zugeordneten Kenngrößen verglichen werden, um atypische Verhaltensweisen zu erkennen und ggf. entsprechende Meldungen zu erzeugen.

9. Verfahren nach einem der vorhergehenden Ansprüche, **dadurch gekennzeichnet, dass** ein Informationssatz (14, 15) ganz oder teilweise zu einer Bedienungs-, Beobachtungsund/oder Leitstation (17) oder zu weiteren Einrichtungen übertragbar und dort zur Darstellung und/oder Auswertung der betreffenden Informationen verwendbar ist.

10. Verfahren nach einem der vorhergehenden Ansprüche, **dadurch gekennzeichnet, dass** die Kommunikation zwischen dem Automatisierungsgerät (10) und einer Bedienungs-, Beobachtungs- und/oder Leitstation (17) mittels Datenpaketen erfolgt, die jeweils einen, mehrere oder alle aktuellen Daten eines Komponentenabbilds oder -profils (14, 15) enthalten.

11. Verfahren nach einem der vorhergehenden Ansprüche, **dadurch gekennzeichnet, dass** die komponentenspezifischen Datenpakete zyklisch von dem Automatisierungsgerät (10) zu der Bedienungs-, Beobachtungs- und/oder Leitstation (17) übertragen werden, wobei die Sendeintervalle einem oder mehreren Steuerzyklen des Automatisierungsgeräts (10) entsprechen können.

12. Verfahren nach einem der vorhergehenden Ansprüche, **dadurch gekennzeichnet, dass** zur Darstellung der aktuellen, komponentenspezifischen Informationen im Rahmen einer Bedienungs-, Beobachtungs- und/oder Leitstation (17) ein einheitliches Programm verwendet wird.

13. Verfahren nach einem der vorhergehenden Ansprüche, **dadurch gekennzeichnet, dass** im Rahmen der Darstellung der aktuellen, komponentenspezifischen Informationen an einer Bedienungs-, Beobachtungs- und/oder Leitstation (17) einheitliche Bildschirmoberflächen und/oder Bedienstrukturen verwendet werden.

14. Verfahren nach einem der vorhergehenden Ansprüche, **dadurch gekennzeichnet, dass** im Rahmen eines Komponentenprofils oder -abbilds (14, 15) von einer Bedienungs- oder Leitstation (17) beeinflussbare Parameter zur Verfügung stehen, um definiert auf die betreffende Anlagenkomponente (2 ... 5) und/oder deren Steuerung einwirken zu können.

15. Automatisierungs- oder Diagnosegerät (10) oder -system für eine oder mehrere Anlagenkomponenten (2 ... 5), **gekennzeichnet durch** wenigstens eine Einrichtung zur Umsetzung von Informationen über wenigstens eine Anlagenkomponente (2 ... 5) in vorgegebene Datenformate (25, 26) sowie ggf. zu deren Auswertung und/oder Aufbereitung in derartiger Form, dass daraus zu jeder gesteuerten und/oder überwachten Anlagenkomponente (2 ... 5) ein genormtes Komponentenprofil und/oder -abbild (14, 15) geschaffen wird, das einer einheitlichen Weiterverarbeitung (16) und/oder -auswertung (12, 17) innerhalb und/oder außerhalb des Automatisierungsgeräts (10) zugänglich ist.
